# FASCICULE DE BREVET EUROPEEN

(11) **EP 0 546 908 B1**
(45) Date de publication et mention de la délivrance du brevet: **06.09.1995**
(21) Numéro de dépôt: 92403299.8
(22) Date de dépôt: 07.12.1992
(51) Int. Cl.: B60N 2/00

(54) **Siège mobile pour véhicule**
Bewegbarer Fahrzeugsitz
Movable seat for a vehicle

(30) Priorité: 12.12.1991 FR 9115442
(43) Date de publication de la demande: 16.06.1993
(73) Titulaire: BERTRAND FAURE AUTOMOBILE "B.F.A.", F-91300 Massy (FR)
(72) Inventeur: Boisset, Bernard, F-91150 Etampes (FR)
(74) Mandataire: Picard, Jean-Claude Georges

(56) Documents cités:
- EP-A- 0 143 678
- US-A- 4 759 580

## Description

La présente invention concerne un siège mobile pour véhicule, du type comportant un mécanisme de fixation déverrouillable permettant la fixation de la structure d'assise de ce siège au plancher dudit véhicule, et des moyens de commande dudit mécanisme destinés à l'amener sélectivement dans une position propre à solidariser ladite structure dudit plancher ou dans une position propre à l'en désolidariser, ledit mécanisme comportant un verrou à épaulement monté rotatif par rapport à ladite structure d'assise et apte à pénétrer dans une ouverture dudit plancher, ce verrou étant agencé pour pouvoir occuper, sous le contrôle desdits moyens de commande, soit une position de déverrouillage pour laquelle il peut pénétrer dans ladite ouverture ou en sortir, soit une position de verrouillage après pénétration dans ladite ouverture, la structure d'assise comportant un pied apte à pénétrer dans ladite ouverture du plancher.

Un mécanisme de fixation de ce type, qui doit pouvoir être manoeuvré sans aucun outillage, peut être prévu au moins à l'arrière de la structure du siège, par exemple aux extrémités des deux pieds arrière, lorsqu'il est souhaitable de pouvoir faire pivoter l'assise du siège vers l'avant, soit pour un gain de place soit pour permettre, s'agissant d'un siège avant, l'accès d'un passager aux places arrière, dans le cas d'un véhicule à deux portes. Un tel mécanisme peut aussi être prévu non seulement à l'arrière de la structure du siège, mais également à l'avant, lorsqu'il est souhaitable de pouvoir désolidariser complètement le siège du plancher du véhicule, par exemple un siège arrière de véhicule monocorps.

Dans les mécanismes de ce type actuellement connus, les pieds concernés de la structure du siège sont terminés par une pièce en forme de fourche qui chevauche une tige d'accrochage fixe du plancher, laquelle relie les deux bords opposés d'une ouverture à section transversale en U, pratiquée dans ce plancher. Le verrou permettant d'assujettir ce pied au plancher, ou de l'en désolidariser, est alors constitué par une sorte de crochet monté pivotant sur ladite pièce en forme de fourche, et propre à pénétrer par son extrémité dans ladite ouverture, et à venir se bloquer sous la tige fixe précitée, ce crochet étant manoeuvré par des moyens appropriés. Un tel mécanisme est décrit dans le document US-A-4 759 580 (correspondant au préambule de la revendication indépendante).

Ladite tige d'accrochage doit être précisément mise en place puis soudée ou sertie sur lesdits bords opposés de l'ouverture en U du plancher, ce qui entraîne une certaine complication dans la fabrication, et est relativement couteux. Il faut d'ailleurs noter qu'il convient de prévoir sur le plancher du véhicule un certain nombre d'ouvertures en U, équipées de ladite tige fixe, pour chaque pied de la structure du siège, lorsque l'on veut, comme c'est souvent le cas, avoir la possibilité de régler la position horizontale du siège sur ce plancher.

En outre, on doit généralement prévoir un cache, par exemple en matière plastique, pour éviter que de la boue ou d'autres saletés ne pénètrent notamment dans les ouvertures du plancher qui ne sont pas utilisées, ce qui, lors d'un autre réglage de la position horizontale du siège, pourrait empêcher le crochet de venir en prise sous la tige correspondante. Tout cela augmente encore la complication et le prix de revient du système.

Le but de la présente invention est de remédier à tous ces inconvénients de la technique antérieure, et, à cet effet, un siège mobile pour véhicule du type mentionné au début est, conformément à la présente invention, caractérisé en ce que la structure d'assise comporte une zone élargie de part et d'autre dudit pied permettant à la structure de prendre appui sur ledit plancher, ledit épaulement du verrou se trouvant, dans la position de verrouillage, en appui sous un bord de l'ouverture du plancher.

L'invention permet ainsi d'éliminer la tige d'accrochage de la technique antérieure, et tous les inconvénients qui en découlent. La fonction de cette tige est maintenant assurée, sans pratiquement aucune complication de fabrication, par le bord précité de l'ouverture du plancher. Il pourra s'agir par exemple d'un bord de tôle roulé, ce qui permettra d'obtenir une rigidité tout à fait comparable à celle de la tige d'accrochage connue, mais avec une fabrication beaucoup plus simple. On pourra également prévoir que ledit bord porte un revêtement antibruit, revêtement qui aura aussi pour effet de protéger mécaniquement ce bord de l'ouverture du plancher.

Selon une autre caractéristique de l'invention, la structure d'assise comporte un flasque muni du pied et de la zone élargie, ledit verrou étant monté le long du flasque.

Avantageusement, le verrou est monté pivotant sur le flasque.

L'invention peut se mettre en oeuvre de plusieurs façons.

Par exemple, les moyens de commande du mécanisme de fixation peuvent être manuels, et comprendre un levier propre à commander directement ledit verrou, ceci de façon en soi connue.

Ces moyens de commande peuvent également être automatiques, notamment dans le cas où ladite structure d'assise est reliée audit flasque par un axe de pivotement monté sur ce dernier. Dans ce cas, il est commode de prévoir des moyens de commande aptes à provoquer la rotation dudit verrou entre lesdites positions de verrouillage et de déverrouillage lorsque l'on fait pivoter ladite structure d'assise sur ledit axe de pivotement.

Le fonctionnement d'un tel mécanisme sera mieux vu par la suite ; il pourra encore se caractériser en ce que lesdits moyens de commande automatiques comprennent un doigt d'entraînement solidaire de ladite structure d'assise et disposé au voisinage dudit axe de pivotement, ce doigt étant accouplé audit verrou et pouvant être reçu dans une encoche dudit verrou. On verra également plus bas l'avantage particulier de cette disposition.

Selon encore une autre caractéristique, l'extrémité dudit axe de pivotement est reçue dans une lumière arquée dudit verrou, propre à en limiter la rotation lors du pivotement de ladite structure d'assise.

Le mécanisme de fixation d'un siège mobile conforme à l'invention pourra encore se caractériser en ce que ledit verrou comporte deux épaulements opposés l'un à l'autre et propres à venir en appui de blocage respectivement sous l'un ou l'autre de deux bords opposés de ladite ouverture du plancher.

Le verrou pourra ainsi se bloquer sur l'un ou l'autre bord de l'ouverture du plancher. Il pourra par exemple être bloqué sous le bord avant en cours d'utilisation normale du siège. Lors d'un pivotement de l'assise du siège vers l'avant, le verrou pourra ainsi passer par la position de déverrouillage mentionnée plus haut, pour laquelle il pourrait sortir de l'ouverture du plancher, mais la rotation de l'assise vers l'avant pourra se poursuivre, en cas de besoin, au-delà de cette position, puisque le verrou, grâce à son second épaulement, pourra alors venir se bloquer sur le bord arrière de l'ouverture considérée du plancher, ce qui maintiendra la solidarisation souhaitable entre l'assise du siège et ce plancher, même après un pivotement de grande amplitude de cette assise.

Des modes d'exécution de l'invention vont maintenant être décrits à titre d'exemples nullement limitatifs, avec référence aux figures du dessin ci-annexé dans lequel :
- la figure 1 représente, vu de l'intérieur, un mécanisme de fixation de siège conforme à la présente invention à moyens de commande manuels, prévu par exemple à l'avant de l'assise ;
- la figure 2 montre à l'avant un autre mode de réalisation de mécanisme conforme à l'invention, à moyens de commande automatiques, ce mécanisme étant représenté en position verrouillée sur le bord avant de l'ouverture du plancher ;
- la figure 2a montre le mécanisme de la figure 2, en position intermédiaire de déverrouillage, après pivotement de l'assise du siège vers l'avant ;
- la figure 2b montre le mécanisme de la figure 2, en position verrouillée sur le bord arrière de la même ouverture du plancher, après pivotement supplémentaire de l'assise du siège vers l'avant ;
- la figure 3 montre une ouverture de plancher à bords nus simplement découpés ; et
- la figure 4 montre une ouverture de plancher à bords découpés et revêtus.

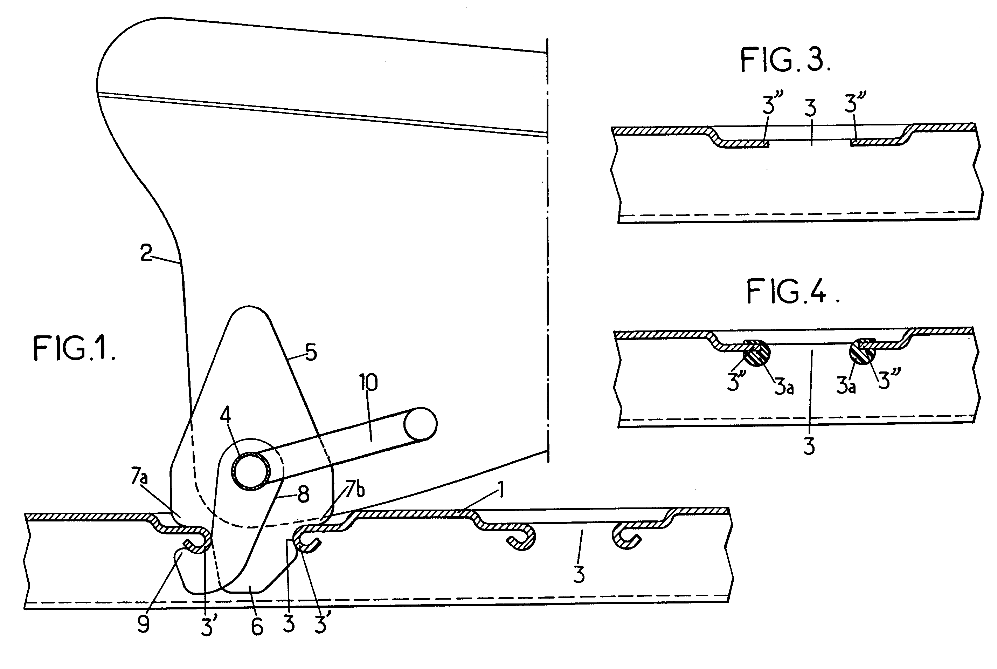

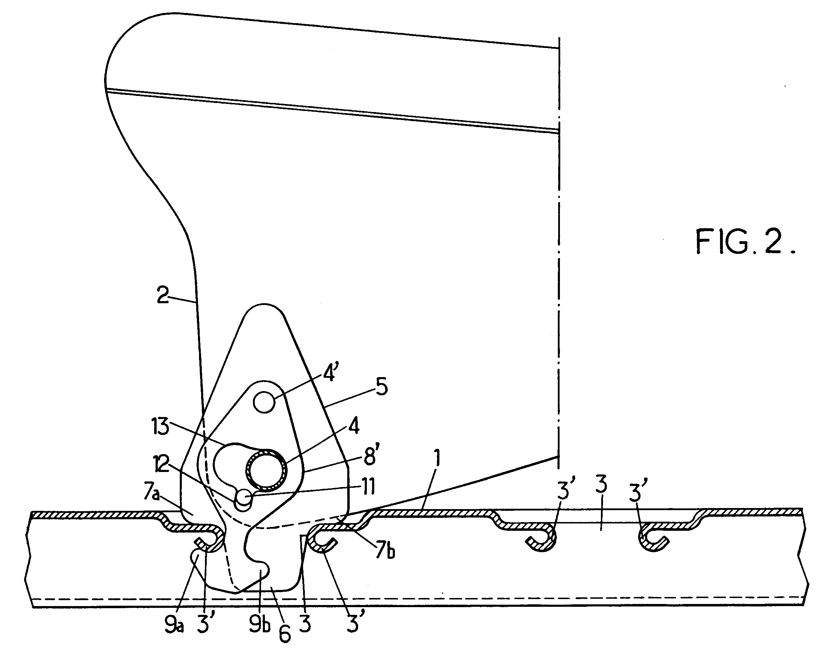

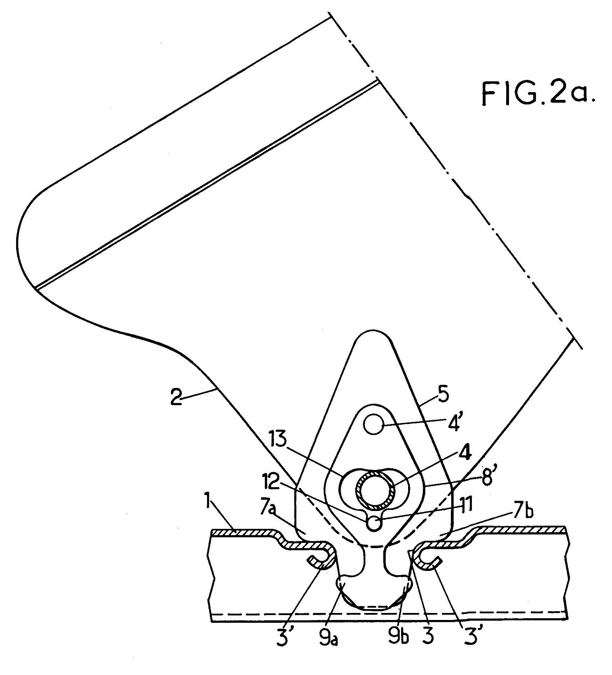

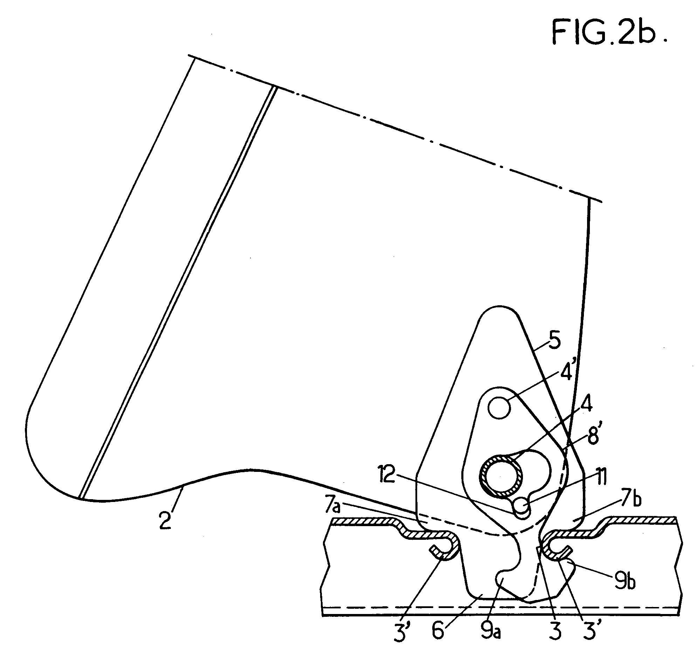

Sur les figures, le plancher du véhicule a été référencé 1, et la structure d'assise du siège en 2 ; le mécanisme de fixation a été représenté sur les figures 1 et 2 vu de l'intérieur de la structure 2 d'assise du siège et à l'avant de celui-ci. S'agissant du côté droit du siège, puisque l'avant de l'assise est tourné vers la gauche du dessin, le mécanisme de fixation prévu sur le côté gauche du siège pourra être semblable et disposé symétriquement au précédent, de sorte qu'il ne sera pas nécessaire de le décrire.

Ceci étant, le plancher 1 du véhicule comporte, pour chaque côté - droit et gauche - de la structure 2 du siège, une série d'ouvertures allongées 3, de préférence également espacées les unes des autres dans la direction longitudinale du véhicule et permettant ainsi de positionner le siège longitudinalement à l'emplacement voulu, par exemple pour gérer au mieux l'espace disponible à l'intérieur du véhicule. Sur les figures 1 et 2, les bords 3' des ouvertures 3 sont des bords de tôle roulés, ce qui permet de les rigidifier et de favoriser un bon fonctionnement du verrouillage. Ils peuvent cependant rester bruts de découpe, comme représenté en 3'' sur la figure 3, mais dans ce cas il est préférable qu'ils soient pourvus de revêtements de protection tels que ceux représentés en 3a sur la figure 4, par exemple en matière plastique pour éviter la propagation des bruits, dus par exemple aux vibrations transmises aux sièges par le véhicule.

Dans le mode de réalisation de la figure 1, la structure 2 de l'assise du siège est montée pivotante sur un axe 4 porté par un flasque de positionnement et de guidage 5 ; ce flasque comporte un pied 6 pénétrant sans jeu dans l'ouverture correspondante 3 du plancher 1, et repose sur ce plancher par une zone élargie 7a, 7b. Sur le même axe 4 du flasque 5 est monté pivotant un verrou 8 à épaulement 9, ce verrou étant solidaire d'un levier de commande manuelle 10. Dans la position de la figure 1, on voit que l'épaulement 9 du verrou est bloqué sous le bord antérieur roulé 3' de l'ouverture 3 correspondante, ce qui bloque le flasque 5 et la partie avant de la structure d'assise 2 sur le plancher 1 du véhicule. Le siège peut cependant pivoter sur l'axe 4, si l'on suppose que sa partie arrière n'est pas verrouillée sur le plancher 1.

Pour obtenir une désolidarisation entre la partie avant du siège et le plancher, on voit qu'il suffit de manoeuvrer le levier 10 dans le sens antihoraire, pour faire pivoter le verrou dans le même sens, dégager l'épaulement 9 du bord roulé antérieur 3' et permettre sa sortie vers le haut par l'ouverture 3. Le pivotement du verrou du mécanisme gauche est commandé simultanément, par exemple par l'intermédiaire d'une barre transversale reliant les deux verrous.

Dans le mode de réalisation des figures 2, 2a et 2b, l'agencement relatif de la structure d'assise 2, de l'axe de pivotement 4 et du flasque 5 est le même que dans le mode de réalisation de la figure 1. Quant au verrou 8', il possède deux épaulements opposés 9a et 9b, et est monté pivotant sur un autre axe 4' du flasque 5. Un doigt d'entraînement 11 solidaire de la structure d'assise 2 est reçu dans une encoche 12 du verrou 8', à peu de distance de l'axe de pivotement 4.

Enfin, une lumière arquée 13 du verrou 8' reçoit l'extrémité de l'axe 4, lequel peut ainsi limiter les débattements angulaires du verrou 8' lorsque son extrémité à épaulements 9a, 9b est dégagée de l'ouverture 3. Ces pivotements du verrou 8' sont commandés automatiquement par pivotement de la structure 2 autour de l'axe 4.

Dans la position de la figure 2, le siège est en position normale et est bloqué à l'avant sur le plancher 1 par mise en prise de l'épaulement antérieur 9a sous le bord roulé correspondant 3' de l'ouverture 3.

Si l'on fait pivoter la structure 2 sur l'axe 4, son doigt 11, agissant sur le bord arrière de l'encoche 12, entraîne le pivotement du verrou 8' sur l'axe 4'. Dans la position intermédiaire de la figure 2a, le verrou peut être extrait de l'ouverture 3, et la partie avant du siège peut donc être désolidarisée du plancher 1 du véhicule.

Cependant on peut, à partir de cette position, continuer à faire pivoter la structure d'assise 2 sur l'axe 4, dans le sens antihoraire, jusqu'à la position extrême de la figure 2b, pour laquelle la partie avant du siège se trouve à nouveau verrouillée sur le plancher 1, l'épaulement arrière 9b du verrou 8' étant alors bloqué sous le bord arrière 3' de l'ouverture 3.

Le doigt d'entraînement 11 du verrou étant notablement moins éloigné de l'axe 4 que de l'axe 4', on voit que l'effet de rotation du siège est démultiplié, puisqu'une rotation de grande amplitude du siège, de l'ordre de 80°, entraîne une rotation beaucoup plus faible - de l'ordre de 27° - du verrou 8'. Cela limite fortement les débattements angulaires du verrou 8', et donc la longueur qu'il est nécessaire de donner aux ouvertures 3.

A partir de la position extrême de la figure 2b, on pourra bien entendu rabattre le siège et, le doigt 11 entraînant alors le verrou 8' dans l'autre sens,
l'épaulement avant 9a de ce dernier pourra revenir se bloquer sous le bord antérieur 3' de l'ouverture 3, après passage par la position intermédiaire de déverrouillage de la figure 2a.

Le mécanisme de fixation du côté gauche du siège étant identique, il va de soi que son fonctionnement est le même, avec des pivotements simultanés du verrou correspondant.

## Revendications

1. Siège mobile pour véhicule, du type comportant un mécanisme de fixation déverrouillable permettant la fixation de la structure d'assise de ce siège au plancher dudit véhicule et des moyens de commande dudit mécanisme destinés à l'amener sélectivement dans une position propre à solidariser ladite structure dudit plancher ou dans une position propre à l'en désolidariser, ledit mécanisme comportant un verrou (8 ; 8') à épaulement (9 ; 9a, 9b) monté rotatif par rapport à ladite structure (2) d'assise et apte à pénétrer dans une ouverture (3) dudit plancher (1), ce verrou (8 ;8') étant agencé pour pouvoir occuper, sous le contrôle desdits moyens de commande, soit une position de déverrouillage pour laquelle il peut pénétrer dans ladite ouverture (3) ou en sortir, soit une position de verrouillage après pénétration dans ladite ouverture, la structure d'assise comportant un pied (6) apte à pénétrer dans ladite ouverture (3) du plancher (1), caractérisé en ce que ladite structure d'assise comporte une zone élargie (7a, 7b) de part et d'autre dudit pied (6) permettant à la structure de prendre appui sur ledit plancher (1),ledit épaulement (9; 9a, 9b) du verrou se trouvant, dans la position de verrouillage, en appui sous un bord (3' ; 3'' ; 3a) de l'ouverture (3) du plancher.

2. Siège selon la revendication 1, caractérisé en ce que ledit bord (3') de l'ouverture du plancher est un bord de tôle roulé.

3. Siège selon la revendication 1 ou 2, caractérisé en ce que ledit bord porte un revêtement antibruit (3a).

4. Siège selon l'une quelconque des revendications précédentes, caractérisé en ce que la structure d'assise comporte un flasque (5) muni du pied (6) et de la zone élargie (7), ledit verrou (8;8') étant monté le long du flasque.

5. Siège selon la revendication 4, caractérisé en ce que ledit verrou (8 ; 8') est monté pivotant sur ledit flasque (5).

6. Siège selon l'une quelconque des revendications précédentes, caractérisé en ce que lesdits moyens de commande sont manuels et comprennent un levier (10) propre à commander directement ledit verrou (8).

7. Siège selon la revendication 5, caractérisé en ce que ladite structure d'assise (2) est reliée audit flasque (5) par un axe de pivotement (4) monté sur ce dernier, et en ce que lesdits moyens de commande sont automatiques, étant aptes à provoquer la rotation dudit verrou (8') entre lesdites positions de verrouillage et de déverrouillage lorsque l'on fait pivoter ladite structure d'assise (2) sur ledit axe de pivotement (4).

8. Siège selon la revendication 7, caractérisé en ce que lesdits moyens de commande automatiques comprennent un doigt d'entraînement (11) solidaire de ladite structure d'assise (2) et disposé au voisinage dudit axe de pivotement (4), ce doigt étant accouplé audit verrou (8').

9. Siège selon l'une des revendications 5 et 8, caractérisé en ce que la distance entre ledit doigt d'entraînement (11) et l'axe (4') de pivotement dudit verrou (8') sur le flasque (5) est notablement plus importante que la distance entre ce doigt (11) et l'axe de pivotement (4) de ladite structure d'assise (2) sur ledit flasque (5).

10. Siège selon la revendication 8 ou 9, caractérisé en ce que ledit doigt (11) est reçu dans une encoche (12) dudit verrou (8').

11. Siège selon l'une quelconque des revendications 7 à 10, caractérisé en ce que l'extrémité dudit axe de pivotement (4) est reçue dans une lumière arquée (13) dudit verrou (8'), propre à en limiter la rotation lors du pivotement de ladite structure d'assise (2).

12. Siège selon l'une quelconque des revendications précédentes, caractérisé en ce que ledit verrou (8') comporte deux épaulements (9a, 9b) opposés l'un à l'autre et propres à venir en appui de blocage respectivement sous l'un ou l'autre de deux bords opposés (3') de ladite ouverture (3) du plancher (1).

## Claims

1. A movable seat for a vehicle of the type comprising a releasable fixing mechanism enabling the seat structure of the seat to be fixed to the floor of the said vehicle and control means for the said mechanism for the purpose of selectively moving it to a position suitable for securing the said structure to the floor or to a position suitable for disconnecting it therefrom, the said mechanism comprising a latch (8; 8') having a shoulder (9; 9a, 9b), the latch being mounted for pivoting relative to the said seat structure (2) and suitable for penetrating a hole (3) in the said floor (1), this latch (8; 8') being able to occupy, under the control of the said control means, either a release position in which it can penetrate the said hole (3) or escape therefrom, or a locking position after it has penetrated the said hole, the seat structure comprising a foot (6) which can penetrate the said hole (3) in the floor (1), characterized in that the said seat structure comprises a widened region (7a, 7b) on either side of the said foot (6) allowing the structure to bear on the said floor (1), the said shoulder (9; 9a, 9b) of the latch being disposed, in the locking position, in engagement beneath an edge (3'; 3''; 3a) of the hole (3) in the floor.

2. A seat according to Claim 1, characterized in that the said edge (3') of the hole in the floor is a rolled edge of sheet metal.

3. A seat according to Claim 1 or Claim 2, characterized in that the said edge carries an anti-noise covering (3a).

4. A seat according to any one of the preceding claims, characterized in that the seat structure comprises a plate (5) having the foot (6) and the widened region (7), the said latch (8; 8') being mounted along the plate.

5. A seat according to Claim 4, characterized in that the said latch (8; 8') is mounted for pivoting on the said plate (5).

6. A seat according to any one of the preceding claims, characterized in that the said control means are manual and comprise a lever (10) for controlling the said latch (8) directly.

7. A seat according to Claim 5, characterized in that the said seat structure (2) is connected to the said plate (5) by a pivot pin (4) mounted thereon, and in that the said control means are automatic, being able to pivot the said latch (8') between the said locking and release positions when the said seat structure (2) is pivoted on the said pivot pin (4).

8. A seat according to Claim 7, characterized in that the said automatic control means comprise a drive pin (11) secured to the said seat structure (2) and disposed in the vicinity of the said pivot pin (4), this drive pin being coupled with the said latch (8').

9. A seat according to one of Claims 5 and 8, characterized in that the distance between the said drive pin (11) and the pivot pin (4') of the said latch (8') on the plate (5) is considerably greater than the distance between this drive pin (11) and the pivot pin (4) of the said seat structure (2) on the said plate (5).

10. A seat according to Claim 8 or Claim 9, characterized in that the said drive pin (11) is housed in a notch (12) in the said latch (8').

11. A seat according to any one of Claims 7 to 10, characterized in that the end of the said pivot pin (4) is housed in an arcuate slot (13) of the said latch (8') suitable for limiting the pivoting thereof when the said seat structure (2) is pivoted.

12. A seat according to any one of the preceding claims, characterized in that the said latch (8') comprises two opposite shoulders (9a, 9b) suitable for taking up locking engagement beneath respective opposite edges (3') of the said hole (3) in the floor (1).

## Patentansprüche

1. Bewegbarer Kraftfahrzeugsitz, der einen Mechanismus zur entriegelbaren Montage, mit dem die Befestigung des Gestells des Sitzteils des Sitzes am Boden des Fahrzeuges erfolgen kann und Einrichtungen zur Steuerung dieses Mechanismus enthält, die dazu dienen, das Gestell wahlweise in eine Stellung, in der es mit dem Boden des Fahrzeuges verbunden werden kann, oder in eine Stellung zu bringen, in der das Gestell von diesem gelöst werden kann, wobei der Mechanismus aus einer Verriegelung (8; 8') mit einer Klaue (9; 9a, 9b) besteht, die drehbar in bezug auf das Gestell (2) des Sitzes befestigt ist und die in eine Öffnung (3) des Bodens (1) eindringen kann, wobei die Verriegelung (8; 8') so ausgebildet ist, daß sie unter Kontrolle der Steuereinrichtungen entweder eine Entriegelungsposition, bei der sie in die Öffnung (3) eindringen oder aus dieser austreten kann oder nach dem Eintreten in die Öffnung eine Verriegelungsposition einnehmen kann und wobei das Gestell des Sitzteils einen Fuß (6) enthält, der in die Öffnung (3) des Bodens (1) eintreten kann, dadurch gekennzeichnet, daß das Gestell des Sitzteils einen verbreiterten Abschnitt (7a, 7b) auf beiden Seiten des Fußes (6) enthält, mit dem sich das Gestell an dem Boden (1) abstützen kann, wobei sich die Klaue (9, 9a, 9b) der Verriegelung in der Verriegelungsstellung an einem Rand (3'; 3''; 3a) der Öffnung (3) des Bodens abstützt.

2. Sitz nach Anspruch 1, dadurch gekennzeichnet, daß der Rand (3') der Öffnung des Bodens ein eingerollter Blechrand ist.

3. Sitz nach Anspruch 1 oder 2, dadurch gekennzeichnet, daß der Rand mit einer geräuschdämpfenden Beschichtung (3a) versehen ist.

4. Sitz nach einem der vorhergehenden Ansprüche, dadurch gekennzeichnet, daß das Gestell des Sitzteils einen Flansch (5) enthält, der mit dem Fuß (6) und dem verbreiterten Abschnitt (7) versehen ist, wobei die Verriegelung (8; 8') längs des Flansches befestigt ist.

5. Sitz nach Anspruch 4, dadurch gekennzeichnet, daß die Verriegelung (8; 8') schwenkbar an dem Flansch (5) befestigt ist.

6. Sitz nach einem der vorhergehenden Ansprüche, dadurch gekennzeichnet, daß die Steuereinrichtungen manuelle Einrichtungen sind und aus einem Hebel (10) bestehen, mit dem die Verriegelung (8) direkt betätigt werden kann.

7. Sitz nach Anspruch 5, dadurch gekennzeichnet, daß das Gestell des Sitzteils (2) mit dem Flansch (5) über eine Schwenkachse (4) verbunden ist, die an dem Flansch befestigt ist und daß die Steuereinrichtungen aus automatischen Einrichtungen bestehen, die die Drehung der Verriegelung (8') zwischen der Verriegelungsstellung und der Entriegelungsstellung bewirken können, wenn man das Gestell des Sitzteils (12) um die Schwenkachse (4) verschwenkt.

8. Sitz nach Anspruch 7, dadurch gekennzeichnet, daß die automatischen Steuereinrichtungen einen Mitnahmefinger (11) enthalten, der mit dem Gestell des Sitzteils verbunden und in der Nähe der Schwenkachse (4) angeordnet ist, wobei der Finger mit der Verriegelung (8') gekuppelt ist.

9. Sitz nach einem der Ansprüche 5 und 8, dadurch gekennzeichnet, daß der Abstand zwischen dem Mitnahmefinger (11) und der Schwenkachse (4') der Verriegelung (8') an dem Flansch (5) beträchtlich größer ist als die Entfernung zwischen dem Finger (11) und der Schwenkachse (4) des Sitzgestells (2) an dem Flansch (5).

10. Sitz nach den Ansprüchen 8 oder 9, dadurch gekennzeichnet, daß der Finger (11) von einer Einbuchtung (12) der Verriegelung (8') aufgenommen wird.

11. Sitz nach einem der Ansprüche 7 bis 10, dadurch gekennzeichnet, daß das Ende der Schwenkachse (4) von einer bogenförmigen Öffnung (13) der Verriegelung (8') aufgenommen wird, die geeignet ist, die Drehbewegung während des Verschwenkens des Gestells (2) des Sitzteils zu begrenzen (2).

12. Sitz nach einem der vorhergehenden Ansprüche, dadurch gekennzeichnet, daß die Verriegelung (8') zwei Klauen (9a, 9b) enthält, die sich einander gegenüberliegen und zur verriegelnden Abstützung unter jeweils einer der beiden sich gegenüberliegenden Ränder (3') der Öffnung (3) des Bodens (1) kommen können.
